# EUROPÄISCHE PATENTANMELDUNG

(11) **EP 4 691 922 A1**
(43) Veröffentlichungstag der Anmeldung: **11.02.2026**
(21) Anmeldenummer: 25166624.4
(22) Anmeldetag: 27.03.2025
(51) Int. Cl.: B64G 1/64

(54) **MECHANISCHER VERBINDER, VERBINDUNGSEINRICHTUNG UND VERFAHREN ZUR HERSTELLUNG EINES MECHANISCHEN VERBINDERS**

(30) Priorität: 06.08.2024 DE 102024122437
(71) Anmelder: Deutsches Zentrum für Luft- und Raumfahrt e.V., 53227 Bonn (DE)
(72) Erfinder: Schleutker, Thorn, 51147 Köln (DE)
(74) Vertreter: Schlimme, Wolfram

(57) **Zusammenfassung**

Ein Verbinder (4, 4') mit einem Lastübertragungsstab (40, 40'), der ausgebildet ist, um Kräfte und/oder Momente von einem mit dem Lastübertragungsstab (40, 40') verbundenen oder verbindbaren ersten Stützkörper (42) zu einem mit dem Lastübertragungsstab (40, 40') verbundenen oder verbindbaren zweiten Stützkörper (44) zu übertragen, zeichnet sich dadurch aus, dass der Lastübertragungsstab (40, 40') ein erstes Stabelement (41) und zumindest ein zweites Stabelement (43) aufweist, die in einem Fügeabschnitt (45, 48) des Lastübertragungsstabs (40, 40') mittels eines Fügemittels (46) miteinander verbunden sind, wobei das Fügemittel (46) oberhalb einer vorgegebenen Temperaturschwelle eine geringere Zug- und/oder Druckfestigkeit aufweist als das jeweilige Stabelement (41, 43).

## Beschreibung

Die vorliegende Erfindung betrifft einen mechanischen Verbinder nach dem Oberbegriff des Patentanspruchs 1 sowie eine zumindest einen derartigen mechanischen Verbinder aufweisende Verbindungseinrichtung. Sie betrifft weiterhin ein Verfahren zur Herstellung eines solchen mechanischen Verbinders.

Aktuell steigt das Interesse der nationalen Raumfahrtagenturen und der Öffentlichkeit an der Vermeidung von Unfällen im Zusammenhang mit zur Erde zurückkehrendem Weltraumschrott. Im Zuge dessen wurden bindende Regeln verabschiedet, die Raumfahrt-betreibende Unternehmen zum Einhalten gewisser Risiko-Grenzwerte verpflichten. In Europa ist dies beispielsweise aktuell ein "Casualty Risk"-Wert von 1:10 000.

Wenn Weltraumgegenstände, beispielsweise Satelliten, dieses Kriterium bei einem unkontrollierten Wiedereintritt in die Erdatmosphäre nicht einhalten, dürfen Sie am Ende ihrer Einsatzzeit nicht einfach sich selbst überlassen werden und müssen gezielt über unbewohntem Gebiet zum Absturz gebracht werden. Dafür müssen sie gegebenenfalls mit einem zusätzlichen Antrieb ausgestattet werden. Satelliten, die schon über einen geeigneten Antrieb verfügen, müssen am Ende ihrer Mission über eine ausreichende Menge Resttreibstoff verfügen, was die Missionsdauer verkürzt oder die Startmasse erhöht. Das aktive Entfernen aus dem Orbit ist daher mit hohen Kosten verbunden und/oder reduziert die mögliche Nutzlastmasse. Die Raumfahrtindustrie versucht daher, Raumfahrzeuge so zu entwerfen, dass diese beim Eintritt in die Erdatmosphäre zu einem ausreichenden Grad verglühen. Wenn ein Weltraumgegenstand ein hinreichend geringes Risiko darstellt, darf er am Ende seiner Lebenszeit sich selbst überlassen werden. Er tritt dann zu einem unbestimmten Zeitpunkt unkontrolliert in die Erdatmosphäre ein und verglüht dort größtenteils.

Numerische Simulationen eines solchen destruktiven Wiedereintritts von Satelliten zeigen, dass es oftmals vorteilhaft ist, wenn sich die Verbindungsstrukturen eines Satelliten bereits zu einem frühen Zeitpunkt öffnen, sodass die beim Wiedereintritt auf den Satelliten einwirkende Strömung der oberen Atmosphärenschicht in den Satelliten eindringen und schon früh die kritischen Komponenten erwärmen kann. Es wird daher oft versucht, Satelliten so zu designen, dass sie sich früh öffnen. Dies kann dadurch erreicht werden, dass die Verbindungselemente der Satellitenstruktur oder der Außenhaut eines Satelliten bei vergleichsweise niedrigen Temperaturen zerstört oder gelöst werden.

Es gibt allerdings auch Fälle, in denen ein späteres Versagen von Verbindungselementen vorteilhaft ist. Dies kann zum Beispiel dann sinnvoll sein, wenn eine leichte und bezüglich des ausreichenden Verglühens kritische Komponente des wiedereintretenden Satelliten ein niedriges Verhältnis von Masse zu Oberfläche aufweist. In diesem Fall kann es vorteilhaft sein, wenn eine schwerere Komponente längere Zeit mit dieser kritischen, leichten Komponente verbunden bleibt, sodass sich die leichte Komponente nicht zu schnell entschleunigt und hinreichend verbrennt.

Aus der WO 2016 / 088 044 A1 ist eine passive Vorrichtung zur Erleichterung der Zerlegbarkeit eines Weltraumgegenstandes beim Wiedereintritt in die Erdatmosphäre bekannt, die mechanische Verbindungsanordnungen zum Zusammenhalten von Strukturbauteilen des Weltraumgegenstandes aufweist, die Bauelemente aus einer leicht schmelzbaren Metalllegierung aufweisen. Diese Bauelemente sind jeweils mit einem der Strukturbauteile fest verbunden und bilden mechanische Koppelungsglieder, welche Schraubbolzen zur mechanischen Verbindung der Strukturbauteile aufnehmen. Im Normalbetrieb halten derartige Schraubverbindungen die Strukturbauteile fest zusammen, wohingegen die hohen Temperaturen beim Wiedereintritt diese Koppelungsglieder erweichen oder gar aufschmelzen und von dem zugehörigen Strukturbauteil ablösen, wodurch sich die Struktur des Weltraumgegenstandes zerlegt, ohne dass die Schraubverbindung selbst gelöst wird.

Die nicht vorveröffentlichte deutsche Patentanmeldung 10 2024 109 240.8 zeigt und beschreibt eine Verbindungseinrichtung zur Herstellung einer mechanischen Verbindung zwischen zwei Körpern, die ein erstes Verbindungselement aufweist, das mit einem zweiten Verbindungselement mechanisch im Eingriff steht, welches seinerseits mit einem Halterungsbauteil verbunden ist. Das zweite Verbindungselement und/oder das Halterungsbauteil bestehen aus einem thermoplastischen Material, welches beim Wiedereintritt in die Erdatmosphäre erweicht, woraufhin eine Federkraft das erste Verbindungselement vom zweiten Verbindungselement oder vom Halterungsbauteil löst.

Diese bekannten Lösungen sind bauteilkomplex und konstruktiv aufwändig und damit teuer. Sie erfordern ein speziell angepasstes Design der mechanischen Verbindungsstellen zwischen den Strukturbauteilen und erhöhen aufgrund ihrer Komplexität das Gewicht einer jeden Verbindungsanordnung. Wenige Gramm Mehrgewicht können bei einem Satelliten mit hunderten Verbindungsstellen bereits ein erhebliches Mehrgewicht bedeuten, was wiederum die Nutzlastkapazität des Satelliten herabsetzt.

Aufgabe der vorliegenden Erfindung ist es daher, einen verbesserten mechanischen Verbinder und eine verbesserte thermisch lösbare Verbindungseinrichtung für Strukturbauteile eines Weltraumgegenstandes anzugeben, die einfacher aufgebaut sind, sowie ein Verfahren zur Herstellung eines darin vorgesehenen mechanischen Verbinders vorzuschlagen.

Der auf die Vorrichtung gerichtete Teil der Aufgabe wird gelöst mit einem mechanischen Verbinder mit den Merkmalen des Patentanspruchs 1 sowie durch eine Verbindungseinrichtung mit den Merkmalen des Patentanspruchs 11 und der auf das Verfahren gerichtete Teil der Aufgabe wird alternativ durch das Verfahren gemäß Anspruch 12 oder Anspruch 13 gelöst.

In der Verbindungseinrichtung ist ein erfindungsgemäßer mechanischer Verbinder mit einem Lastübertragungsstab vorgesehen, der ausgebildet ist, um Kräfte und/oder Momente von einem mit dem Lastübertragungsstab verbundenen oder verbindbaren ersten Stützkörper zu einem mit dem Lastübertragungsstab verbundenen oder verbindbaren zweiten Stützkörper zu übertragen, wobei sich der mechanische Verbinder dadurch auszeichnet, dass der Lastübertragungsstab ein erstes Stabelement und zumindest ein zweites Stabelement aufweist, die in einem Fügeabschnitt des Lastübertragungsstabs mittels eines Fügemittels miteinander verbunden sind, wobei das Fügemittel oberhalb einer vorgegebenen Temperaturschwelle eine geringere Zug- und/oder Druckfestigkeit aufweist als das jeweilige Stabelement.

Der mechanische Verbinder integriert mit seinem die Stabelemente miteinander verbindenden Fügeabschnitt, in welchem das oberhalb einer vorgegebenen Temperaturschwelle eine geringere Zug- und/oder Druckfestigkeit als das jeweilige Stabelement aufweisende Fügemittel vorgesehen ist, eine thermisch auslösbare Sollbruchstelle in den Lastübertragungsstab des Verbinders. Der Verbinder kann hier beispielsweise als Schraube, Niet oder als anderweitiger Zuganker oder Druckstab ausgebildet sein, wobei der jeweilige Schaft, also der Lastübertragungsstab, bereits die thermische Sollbruchstelle enthält. Auf diese Weise kann ohne größeren konstruktiven Aufwand ein klassischer Verbinder (ohne thermische Sollbruchstelle) durch einen erfindungsgemäßen Verbinder ersetzt werden. Ein solches einfaches "Drop-In-Replacement" spart gegenüber den aus dem Stand der Technik bekannten Lösungen Gewicht und Bauraum ein und bedarf keiner Umkonstruktion von vorhandenen Satelliten-Layouts.

Es können hier nicht nur zwei durch das Fügemittel miteinander verbundene Stabelemente vorgesehen sein, sondern es können auch mehr als zwei Stabelemente den Lastübertragungsstab bilden, die jeweils in einem Fügeabschnitt miteinander verbunden sind.

Insbesondere kann bei einem als Schraube ausgebildeten mechanischen Verbinder ein Fügeabschnitt auch in einem Schraubenkopf oder in einem Schraubenschaft unmittelbar am Übergang zum Schraubenkopf vorgesehen sein.

Ist einer der Stützkörper mit dem Lastübertragungsstab verbunden, so bildet dieser Stützkörper ein Element des Lastübertragungsstabs und somit ein Stabelement im Sinne der Erfindung, so dass der Fügeabschnitt somit auch zwischen dem Stützkörper und einem weiteren Stabelement vorgesehen sein kann. Auf diese Weise kann der Fügeabschnitt beispielsweise zwischen einem Schraubenkopf oder Bolzenkopf als Stützkörper und einem Schraubenschaft oder Bolzenschaft als weiterem Stabelement vorgesehen sein und muss nicht notwendigerweise zwei Schaftelemente miteinander verbinden, obwohl die Verbindung zweier oder mehrerer Schaftelemente ebenfalls eine Ausführungsform der Erfindung bildet.

Durch geeignete Wahl des Fügemittels lässt sich vorzugsweise die vorgegebene Temperaturschwelle (Versagenstemperatur) und damit der Zeitpunkt, in dem bei einem Wiedereintritt das Versagen des mechanischen Verbinders und damit der Zerlegungsprozess des Weltraumgegenstandes beginnt, beeinflussen. Die Versagenstemperatur und der Versagensmechanismus des mechanischen Verbinders können so auf die spezifischen Anforderungen des jeweiligen Weltraumgegenstandes und sogar der jeweiligen Verbindung individuell ausgelegt werden. Sind in einem Weltraumgegenstand mehrere erfindungsgemäße mechanische Verbinder vorgesehen, so können diese derart ausgelegt sein, dass deren thermisches Versagen bei unterschiedlichen Versagenstemperaturen eintritt. Dadurch lässt sich eine Reihenfolge der Desintegration von Komponenten eines Weltraumgegenstandes vorgeben.

Weitere bevorzugte und vorteilhafte Ausgestaltungsmerkmale des erfindungsgemäßen mechanischen Verbinders sind Gegenstand der Unteransprüche 2 bis 10.

Vorzugsweise weist das Fügemittel eine niedrigere Schmelztemperatur auf als das jeweilige Stabelement. Dieses Fügemittel besitzt vorzugsweise eine geringere Temperaturfestigkeit als das Material des Stabelements.

Weiter von Vorteil ist es, wenn das Fügemittel aus einem Kunststoffmaterial, vorzugsweise aus einem Kunstharz, besteht oder ein solches aufweist. Dieses Kunstharz wird beim Wiedereintritt aufgrund der hohen Temperaturen durch Reaktion der enthaltenen chemischen Komponenten zerfallen. Dabei kann es zur Ausbildung von Gasen im Inneren des Kunstharzes kommen, die aufgrund des entstehenden Gasdrucks die Struktur des Kunstharzes aufsprengen und den Fügeabschnitt auf diese Weise desintegrieren, was schließlich zu einem Lösen der Verbindung zwischen den Stabelementen des Lastübertragungsstabs und in der Folge zu einer Desintegration des Weltraumgegenstandes führt.

Gemäß einer anderen bevorzugten Ausführungsform des erfindungsgemäßen mechanischen Verbinders bestehen die Stabelemente aus Metall oder weisen ein Metall auf und sind mittels des metallischen Fügemittels miteinander verlötet. Als Metall kommen hier sowohl für die Stabelemente als auch für das Fügemittel reine Metalle oder Metalllegierungen in Frage, wobei das Fügemittel im Fall einer Verlötung der Stabelemente von einem Lot gebildet ist, das vorzugsweise aus einer Metalllegierung besteht.

Vorzugsweise bilden das erste Stabelement und das zweite Stabelement im Fügeabschnitt eine Schäftungsverbindung aus. Hierdurch wird vorteilhafterweise die Verbindungsoberfläche der beiden Stabelemente im Fügeabschnitt vergrößert, wodurch die Kraftübertragungsfähigkeit, insbesondere die Übertragungsfähigkeit von Zugkräften, zwischen den beiden Stabelementen deutlich verbessert wird.

Von besonderem Vorteil ist es auch, wenn das erste Stabelement und das zweite Stabelement im Fügeabschnitt allgemein ineinandergreifen, wodurch ebenfalls die Verbindungsoberfläche vergrößert wird. Dabei ist es von Vorteil, wenn - ähnlich wie bei einer Schäftungsverbindung - in Zugkraftrichtung der miteinander verbundenen Stabelemente keine Formschlussverbindung besteht, wodurch bei einem thermisch bedingten Zerfall, bei einem Erweichen oder bei einem Aufschmelzen des Fügemittels ein freies Lösen der Stabelemente voneinander ermöglicht wird. In Querrichtung zur Zugkraftrichtung kann allerdings eine Formschlussverbindung vorteilhaft sein, um einen seitlichen Versatz der Stabelemente zu vermeiden.

Dabei zeichnet sich eine vorteilhafte Weiterbildung dadurch aus, dass das erste Stabelement an seinem dem Fügeabschnitt zugewandten Ende einen sich zum zweiten Stabelement hin erstreckenden Koppelungsansatz oder eine sich vom zweiten Stabelement weg erstreckende Koppelungsausnehmung aufweist, dass das zweite Stabelement an seinem dem Fügeabschnitt zugewandten Ende eine sich vom ersten Stabelement weg erstreckende Koppelungsausnehmung oder einen sich zum ersten Stabelement hin erstreckenden Koppelungsansatz aufweist, dass die Koppelungsausnehmung zur Aufnahme des Koppelungsansatzes ausgebildet ist, und dass das Fügemittel zwischen der Oberfläche der Koppelungsausnehmung und der Oberfläche des Koppelungsansatzes vorgesehen ist und diese miteinander verbindet. Bei mehr als zwei Stabelementen können auch die weiteren Stabelemente auf diese Weise mit angebunden werden.

Besonders vorteilhaft ist dabei, wenn die Stabelemente jeweils einen runden Querschnitt aufweisen und koaxial zueinander ausgerichtet sind, wobei auch die Koppelungsausnehmung und der Koppelungsansatz koaxial zueinander ausgerichtet sind. Der Koppelungsansatz und die Koppelungsausnehmung können koaxial oder exzentrisch zur gemeinsamen Achse der Stabelemente angeordnet sein. Besonders von Vorteil ist dabei, wenn der Koppelungsansatz kegelförmig oder kegelstumpfförmig ausgebildet ist und die Koppelungsausnehmung eine entsprechende kegelförmige oder kegelstumpfförmige Vertiefung zur Aufnahme des Koppelungsansatzes ausbildet. Alternativ können der Kopplungsansatz und die Kopplungsausnehmung vorteilhafterweise einen polygonalen oder sternförmigen Querschnitt aufweisen.

Bevorzugt ist bei allen Varianten, wenn der Koppelungsansatz und die Koppelungsausnehmung leicht konisch sich zur Trennfuge erweiternd ausgebildet sind. Dadurch wird der Trennvorgang erleichtert.

Vorteilhaft ist eine Ausführungsform, bei der der Lastübertragungsstab zumindest bereichsweise als Gewindestange ausgebildet ist.

Dabei ist der mechanische Verbinder vorzugsweise als Schraube mit einem den ersten Stützkörper bildenden Schraubenkopf und einem die Gewindestange ausbildenden oder aufweisenden Schraubenschaft ausgestaltet. Der zumindest eine, einen thermischen Versagensabschnitt bildende Fügeabschnitt kann im Schraubenschaft, im Schraubenkopf und/oder zwischen dem Schraubenschaft und dem Schraubenkopf, vorzugsweise am Übergang vom Schraubenkopf in den Schraubenschaft, ausgebildet sein. Die Anordnung eines Fügeabschnitts im Schraubenkopf oder unmittelbar am Übergang vom Schraubenkopf in den Schraubenschaft ist insbesondere bei einem außenliegenden Schraubenkopf von Vorteil, da sich dieser beim Wiedereintritt schnell und nachhaltig erhitzt, so dass das erwünschte thermische Versagen des Fügeabschnitts schnell und wirksam eintritt.

Der auf die Verbindungseinrichtung gerichtete Teil der Aufgabe wird gelöst durch eine Verbindungseinrichtung für Strukturbauteile eines Weltraumgegenstandes mit zumindest einem erfindungsgemäßen mechanischen Verbinder, der zumindest zwei Strukturbauteile des Weltraumgegenstandes mittelbar oder unmittelbar miteinander mechanisch verbindet.

Die Erfindung betrifft zudem einen Weltraumgegenstand, insbesondere einen Satelliten oder ein Modul einer Raumstation, mit zumindest einer derartigen Verbindungseinrichtung. Ein solcher Weltraumgegenstand kann sich beim Wiedereintritt in die Erdatmosphäre durch thermisch bedingtes Versagen der zumindest einen Verbindungseinrichtung in geplanter Weise selbst desintegrieren.

Der auf das Verfahren zur Herstellung eines erfindungsgemäßen mechanischen Verbinders gerichtete Teil der Aufgabe wird gelöst durch ein Verfahren mit den Schritten:
a) Zusammenfügen eines ersten Stabelements und zumindest eines zweiten Stabelements mittels eines Fügemittels zu einem Lastübertragungsstab
   und vorzugsweise
b) Oberflächenbearbeiten des Lastübertragungsstabs, um einen aus zumindest zwei mittels des Fügemittels zusammengefügten Stabelementen bestehenden Lastübertragungsstab von vorgegebener Außenkontur zu erhalten.

Das Fügemittel kann hier beispielsweise ein geeignetes Lot und die Fügetechnik kann Löten sein. Auch kann die Verbindung der beiden Stabelemente durch Verkleben mittels eines geeigneten Klebstoffs gebildet sein. Die vorgegebene Außenkontur kann beispielsweise eine durchgehende zylindrische Außenkontur sein, die über ihre gesamte Länge oder nur über einen Teil ihrer Länge mit einem Gewinde versehen wird.

Alternativ wird der auf das Verfahren zur Herstellung eines erfindungsgemäßen mechanischen Verbinders gerichtete Teil der Aufgabe gelöst durch ein Verfahren mit den Schritten:
a') Additive Fertigung eines Lastübertragungsstabs durch
   a1') additive Fertigung eines ersten Stabelements aus einem ersten Material,
   a2') additive Fertigung eines Fügeabschnitts aus einem Fügemittel an oder auf dem ersten Stabelement,
   a3') additive Fertigung eines zweiten Stabelements aus dem ersten oder einem weiteren Material an oder auf dem Fügeabschnitt
   und vorzugsweise
b') Oberflächenbearbeiten des Lastübertragungsstabs, um einen aus zumindest zwei Stabelementen und einer Fügemittel-Zwischenschicht integral ausgebildeten Lastübertragungsstab von vorgegebener Außenkontur zu erhalten.

Durch die additive Fertigung wird der Lastübertragungsstab einschließlich des Fügeabschnitts aus entsprechend unterschiedlichen Materialien integral gefertigt und der zusätzliche Schritt des Verlötens oder Verklebens entfällt. Die vorgegebene Außenkontur kann auch hier beispielsweise eine durchgehende zylindrische Außenkontur sein, die über ihre gesamte Länge oder nur über einen Teil ihrer Länge mit einem Gewinde versehen wird.

Die Oberflächengestaltung kann entweder im Zuge der additiven Fertigung durchgeführt werden, wobei dann der gefertigte Lastübertragungsstab bereits das Endprodukt, also der Lastübertragungsstab, sein kann, oder sie kann im separat ausgeführten Schritt b') nachträglich vorgenommen werden.

Vorteilhaft ist bei beiden alternativen Verfahren zur Herstellung eines erfindungsgemäßen mechanischen Verbinders, wenn der Schritt des Oberflächenbearbeitens oder die im Zuge der additiven Fertigung vorgenommene Oberflächengestaltung des Lastübertragungsstabs das Fertigen eines Außengewindes auf zumindest einem Oberflächenbereich des Lastübertragungsstabs umfasst.

Dabei ist es von besonderem Vorteil, wenn das erste Stabelement oder das zweite Stabelement mit einem Schraubenkopf versehen ist oder bei einer additiven Fertigung mit einem Schraubenkopf versehen wird oder von einem Schraubenkopf gebildet wird.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:
- Fig. 1: eine schematische Darstellung eines aus mehreren Einzelkomponenten bestehenden Weltraumgegenstandes, die mittels erfindungsgemäße mechanische Verbinder aufweisenden Verbindungseinrichtungen miteinander verbunden sind;
- Fig. 2: eine teilweise geschnittene Darstellung einer Verbindungseinrichtung mit einem erfindungsgemäßen mechanischen Verbinder;
- Fig. 3: eine teilweise geschnittene Darstellung eines erfindungsgemäßen mechanischen Verbinders und
- Fig. 4: eine teilweise geschnittene Darstellung einer Verbindungseinrichtung analog Fig. 2 mit einem abgewandelten erfindungsgemäßen mechanischen Verbinder.

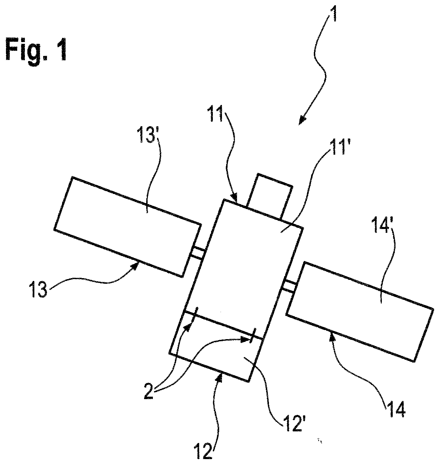

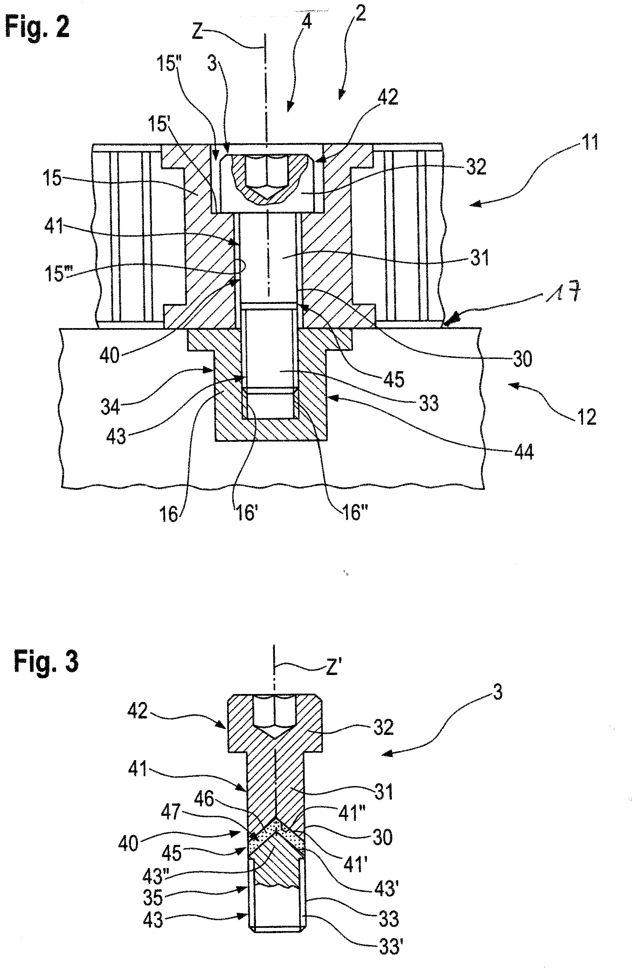

Fig. 1 zeigt schematisch einen Weltraumgegenstand 1 in Form eines Satelliten, der aus mehreren, Einzelkomponenten bildenden Körpern 11, 12, 13, 14 besteht, die untereinander jeweils mit mehreren, erfindungsgemäße Verbinder aufweisenden Verbindungseinrichtungen 2 verbunden sind und von denen eine nachstehend anhand der Fig. 2 beispielhaft beschrieben ist. Der Weltraumgegenstand 1 weist im gezeigten Beispiel vier Strukturbauteile auf, die jeweils einem der Körper 11, 12, 13, 14 zugeordnet sind, nämlich eine Satellitenrumpfstruktur 11', eine Batteriepack-Struktur 12', eine erste Solarpanelstruktur 13' und eine zweite Solarpanelstruktur 14'. Diese Strukturbauteile sind jeweils durch entsprechende Verbindungseinrichtungen 2 miteinander verbunden, von denen in Fig. 1 nur zwei Verbindungseinrichtungen 2 symbolisch dargestellt sind.

Die in Fig. 2 gezeigte Verbindungseinrichtung 2 stellt eine mechanische Verbindung zwischen dem ersten Körper 11 und dem zweiten Körper 12 her, wobei die beiden Körper 11 und 12 in einem Kontaktbereich 17 aneinander anliegen. Die Verbindungseinrichtungen zwischen den übrigen Körpern sind im Wesentlichen identisch ausgebildet und es gilt diesbezüglich auch die nachstehende Beschreibung.

Die Verbindungseinrichtung 2 ist in Fig. 2 beispielhaft als Schraubverbindung mit einer Schraube 3 als erfindungsgemäß ausgebildetem mechanischen Verbinder 4 dargestellt. Die Erfindung kann jedoch auch mittels eines anderen erfindungsgemäß ausgebildeten mechanischen Verbinders 4, beispielsweise mittels Nieten, Zapfen oder ähnlichem, verwirklicht sein, der einen Lastübertragungsstab 40 aufweist, welcher ausgebildet ist, um Kräfte und/oder Momente von einem ersten mit dem Lastübertragungsstab 40 verbundenen oder verbindbaren Stützkörper 42 zu einem zweiten mit dem Lastübertragungsstab 40 verbundenen oder verbindbaren Stützkörper 44 zu übertragen. Im dargestellten Fall einer Schraube ist der Lastübertragungsstab 40 von rundem Querschnitt.

Die Schraube 3 weist einen mit einem Schraubenschaft 30 integral ausgebildeten und somit verbundenen Schraubenkopf 32 auf, der den ersten Stützkörper 42 des mechanischen Verbinders 4 bildet. Im gezeigten Beispiel bildet der Schraubenschaft 30 den Lastübertragungsstab 40. Der Schraubenschaft 30 weist als erstes Stabelement 41 einen vom Schraubenkopf 32 ausgehenden gewindefreien zylindrischen Schaftabschnitt 31 sowie einen sich an diesen anschließenden Gewindeabschnitt 33 auf, der ein zweites Stabelement 43 in Form einer Gewindestange 35 bildet.

Mit dem Schraubenkopf 32 stützt sich die Schraube 3 an einer Schulter 15' einer Verstärkungshülse 15 ab, die in den ersten Körper 11 eingesetzt und mit diesem fest verbunden ist. Die Verstärkungshülse 15 weist eine Vertiefung 15" zur Aufnahme des Schraubenkopfes 32 und eine die Vertiefung 15" verlängernde zentrale Durchgangsbohrung 15‴ auf, die für den Durchtritt des Schraubenschaftes 30 ausgebildet ist. Die Schulter 15' ist am Übergang der im Durchmesser größeren Vertiefung 15" zur zentralen Durchgangsbohrung 15‴ mit kleinerem Durchmesser ausgebildet.

Im zweiten Körper 12 ist eine Gewindehülse 16 angebracht, die eine mit einem Innengewinde 16" versehene Gewindebohrung 16' aufweist, welche nach außen mündet und koaxial zur Bohrungsachse Z der zentralen Durchgangsbohrung 15‴ der Verstärkungshülse 15 im ersten Körper 11 ausgerichtet ist. Die Gewindebohrung 16' ist zur Schraubaufnahme des mit einem Außengewinde 33' versehenen Gewindeabschnitts 33 der Schraube 3 ausgebildet, so dass die Gewindehülse 16 einen Mutterneinsatz 34 als zweiten Stützkörper 44 ausbildet, der mit dem Schraubenschaft 30 als Lastübertragungsstab 40 verbindbar ist.

Wie in der Schnittdarstellung der Fig. 3 zu erkennen ist, ist der den Lastübertragungsstab 40 bildende Schraubenschaft 30 im Bereich des Übergangs vom gewindefreien Schaftabschnitt 31 zum Gewindeabschnitt 33 geteilt ausgebildet, wobei diese beiden Stabelemente 41 und 43 koaxial entlang der Schraubenachse Z' ausgerichtet sind und in einem zwischen dem gewindefreien Schaftabschnitt 31 und dem Gewindeabschnitt 33 gelegenen Fügeabschnitt 45 mittels eines Fügemittels 46 miteinander verbunden sind. Obwohl in Fig. 2 der Fügeabschnitt 45 versetzt zum Kontaktbereichs 17 dargestellt ist, wird der Fügeabschnitt 45 vorteilhafterweise in der Ebene des Kontaktbereichs 17 vorgesehen, um die Trennung der beiden Körper 11 und 12 zu erleichtern.

Im Bereich des Fügeabschnitts 45 weist das erste Stabelement 41 an seinem dem Fügeabschnitt 45 und somit dem zweiten Stabelement 43 zugewandten Ende 41' eine sich vom zweiten Stabelement 43 weg erstreckende Koppelungsausnehmung 41" auf und das zweite Stabelement 43 weist an seinem dem Fügeabschnitt 45 und somit dem ersten Stabelement 41 zugewandten Ende 43' einen sich zum ersten Stabelement 41 hin erstreckenden Koppelungsansatz 43" auf, wobei die Koppelungsausnehmung 41" zur Aufnahme des Koppelungsansatzes 43" ausgebildet ist. Selbstverständlich kann alternativ das erste Stabelement 41 mit einem Koppelungsansatz ausgestattet sein und das zweite Stabelement 43 kann eine Koppelungsausnehmung aufweisen. In einen zwischen der Oberfläche der Koppelungsausnehmung 41" und der Oberfläche des Koppelungsansatzes 43" gebildeten Spalt 47 ist das Fügemittel 46 eingebracht und verbindet die beiden Stabelemente 41 und 43 miteinander. Das Fügemittel 46 kann im Falle einer Verklebung der beiden Stabelemente 41, 43 ein Klebstoff sein oder es kann im Falle einer Verlötung ein aus einem Metall oder einer Metalllegierung bestehendes Lötmittel sein. Je nach Art der Verlötung kann des Lötmittel ein Weichlot oder ein Hartlot sein.

Besonders vorteilhaft ist es, wenn der erfindungsgemäße mechanische Verbinder 4 additiv gefertigt wird, wobei der Lastübertragungsstab 40 in drei Phasen additiv gefertigt wird, nämlich durch eine zunächst erfolgende additive Fertigung des ersten Stabelements 41 aus einem ersten Material, eine sich daran anschließende additive Fertigung des Fügeabschnitts 45 aus dem Fügemittel 46 an oder auf dem Endabschnitt 41' des ersten Stabelements 41, und dann durch eine additive Fertigung des zweiten Stabelements 43 aus dem ersten oder einem weiteren Material an oder auf dem Fügeabschnitt 45. In einer der beschriebenen Vorgehensweise vorangestellten oder nachgeordneten Fertigungsphase kann noch ein Stützkörper 42, zum Beispiel ein Schraubenkopf 32 oder ein Nietkopf, durch additive Fertigung integral mit dem Lastübertragungsstab 40 ausgebildet werden. Im Falle einer Schraube kann auch der Gewindeabschnitt 33 im Zuge der additiven Fertigung integral mit ausgebildet werden, er kann aber alternativ auch durch eine nachträgliche Oberflächenbearbeitung an einem durch additive Fertigung hergestellten Lastübertragungsstab gebildet werden, um dadurch einen aus zwei Stabelementen und einer Fügemittel-Zwischenschicht integral ausgebildeten Lastübertragungsstab von vorgegebener Außenkontur mit dem Außengewinde 33' zu erhalten. Selbstverständlich ist es gemäß einem alternativen vorzugsweisen Verfahren auch möglich, die Einzelteile des Lastübertragungsstabs additiv zu fertigen und diese dann mittels eines Fügemittels im Fügespalt miteinander zu verbinden.

Alternativ zur additiven Fertigung ist es selbstverständlich auch möglich, den erfindungsgemäßen mechanischen Verbinder durch Zusammenfügen eines vorgefertigten ersten Stabelements und eines vorgefertigten zweiten Stabelements mittels eines Fügemittels zu einem Lastübertragungsstab herzustellen. Auch bei dieser Fertigungsmethode kann sich noch ein Schritt des Oberflächenbearbeitens des Lastübertragungsstabs anschließen, um einen aus zwei mittels eines Fügemittels zusammengefügten Stabelementen bestehenden Lastübertragungsstab von vorgegebener Außenkontur, beispielsweise durch Schneiden oder Aufprägen eines Gewindes auf zumindest einem Oberflächenbereich des Lastübertragungsstabs, zu erhalten.

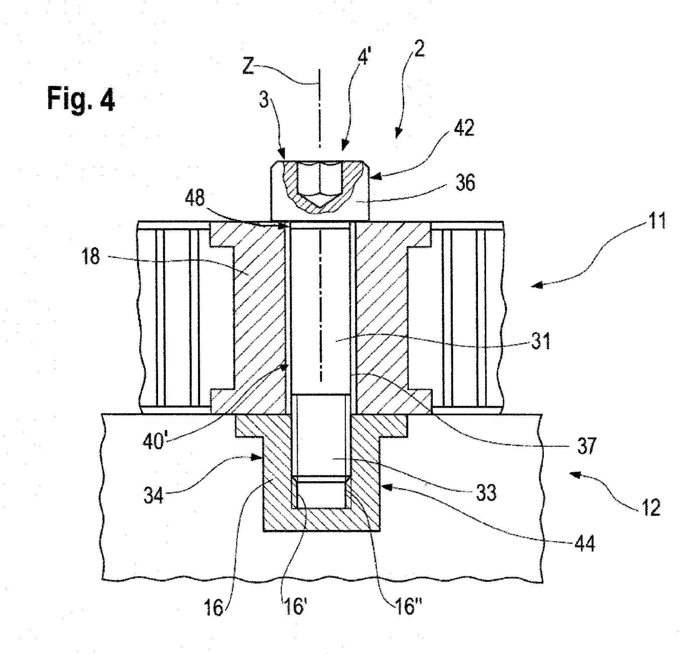

Fig. 4 zeigt einen Aufbau, der größtenteils dem Aufbau in Fig. 2 entspricht. Lediglich der als Schraube ausgebildete mechanische Verbinder 4' und die die Schraube aufnehmende Verstärkungshülse 18 weichen vom Beispiel der Fig. 2 ab. Daher werden nachstehend auch nur die Abweichungen beschrieben.

Der mechanische Verbinder 4' ist von einer Schraube als Lastübertragungsstab 40' gebildet, deren das erste Stabelement 41 bildende Schraubenkopf 36 außen auf der Verstärkungshülse 18 aufliegt und der aus der Kontur des ersten Körpers 11 hervorsteht. Dadurch erwärmt sich der Schraubenkopf 36 beim Wiedereintritt schneller als der versenkt angeordnete Schraubenkopf 32 im Beispiel der Fig. 2. Dieser Verbinder 4' weist einen Fügeabschnitt 48 am Übergang zwischen dem Schraubenkopf 36 und dem das zweite Stabelement 43 bildenden Schraubenschaft 37 auf. Im Aufbau und in der Funktionsweise entspricht der Fügeabschnitt 48 dem in Verbindung mit Fig. 2 beschriebenen Fügeabschnitt 45. Aufgrund der Nähe zum sich schnell erwärmenden Schraubenkopf 36 desintegriert dieser Fügeabschnitt 48 schneller als der Fügeabschnitt 45 im Beispiel der Fig. 2.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Weltraumgegenstand
- 2: Verbindungseinrichtung
- 3: Schraube
- 4: mechanischer Verbinder
- 4': mechanischer Verbinder
- 11: erster Körper
- 11': Satellitenrumpfstruktur
- 12: zweiter Körper
- 12': Batteriepack-Struktur
- 13: dritter Körper
- 13': erste Solarpanelstruktur
- 14: vierter Körper
- 14': zweite Solarpanelstruktur
- 15: Verstärkungshülse
- 15': Schulter
- 15": Vertiefung
- 15‴: Durchgangsbohrung
- 16: Gewindehülse
- 16': Gewindebohrung
- 16": Innengewinde
- 17: Kontaktbereich
- 18: Verstärkungshülse
- 30: Schraubenschaft
- 31: gewindefreier Schaftabschnitt
- 32: Schraubenkopf
- 33: Gewindeabschnitt von 30
- 33': Außengewinde
- 34: Mutterneinsatz
- 35: Gewindestange
- 36: Schraubenkopf
- 37: Schraubenschaft
- 40: Lastübertragungsstab
- 40': Lastübertragungsstab
- 41: erstes Stabelement
- 41': dem zweiten Stabelement zugewandtes Ende von 41
- 41": Koppelungsausnehmung
- 42: erster Stützkörper
- 43: zweites Stabelement
- 43': dem ersten Stabelement zugewandtes Ende von 43
- 43": Koppelungsansatz
- 44: zweiter Stützkörper
- 45: Fügeabschnitt
- 46: Fügemittel
- 47: Spalt
- 48: Fügeabschnitt

- Z: Bohrungsachse
- Z': Schraubenachse

## Patentansprüche

1. Mechanischer Verbinder (4, 4') mit einem Lastübertragungsstab (40, 40'), der ausgebildet ist, um Kräfte und/oder Momente von einem mit dem Lastübertragungsstab (40, 40') verbundenen oder verbindbaren ersten Stützkörper (42) zu einem mit dem Lastübertragungsstab (40, 40') verbundenen oder verbindbaren zweiten Stützkörper (44) zu übertragen, **dadurch gekennzeichnet,**
**dass** der Lastübertragungsstab (40, 40') ein erstes Stabelement (41) und zumindest ein zweites Stabelement (43) aufweist, die in einem Fügeabschnitt (45, 48) des Lastübertragungsstabs (40, 40') mittels eines Fügemittels (46) miteinander verbunden sind, wobei das Fügemittel (46) oberhalb einer vorgegebenen Temperaturschwelle eine geringere Zug- und/oder Druckfestigkeit aufweist als das jeweilige Stabelement (41, 43).

2. Mechanischer Verbinder nach Anspruch 1,
**dadurch gekennzeichnet,**
**dass** das Fügemittel (46) eine niedrigere Schmelztemperatur aufweist als das jeweilige Stabelement (41, 43).

3. Mechanischer Verbinder nach Anspruch 1 oder 2,
dass das Fügemittel (46) aus einem Kunststoffmaterial, vorzugsweise aus einem Kunstharz, besteht oder ein solches aufweist.

4. Mechanischer Verbinder nach Anspruch 1 oder 2,
**dadurch gekennzeichnet,**
**dass** die Stabelemente (41, 43) aus Metall bestehen oder ein Metall aufweisen und mittels des metallischen Fügemittels (46) miteinander verlötet sind.

5. Mechanischer Verbinder nach einem der vorhergehenden Ansprüche,
**dadurch gekennzeichnet,**
**dass** das erste Stabelement (41) und das zweite Stabelement (43) im Fügeabschnitt (45, 48) eine Schäftungsverbindung ausbilden.

6. Mechanischer Verbinder nach einem der vorhergehenden Ansprüche,
**dadurch gekennzeichnet,**
**dass** das erste Stabelement (41) und das zweite Stabelement (43) im Fügeabschnitt (45, 48) ineinandergreifen.

7. Mechanischer Verbinder nach Anspruch 6,
**dadurch gekennzeichnet,**
**dass** das erste Stabelement (41) an seinem dem Fügeabschnitt (45, 48) zugewandten Ende (41') einen sich zum zweiten Stabelement (43) hin erstreckenden Koppelungsansatz oder eine sich vom zweiten Stabelement (43) weg erstreckende Koppelungsausnehmung (41") aufweist,
**dass** das zweite Stabelement (43) an seinem dem Fügeabschnitt (45, 48) zugewandten Ende (43') eine sich vom ersten Stabelement (41) weg erstreckende Koppelungsausnehmung oder einen sich zum ersten Stabelement (41) hin erstreckenden Koppelungsansatz (43") aufweist, dass die Koppelungsausnehmung (41") zur Aufnahme des Koppelungsansatzes (43") ausgebildet ist, und
**dass** das Fügemittel (46) zwischen der Oberfläche der Koppelungsausnehmung (41") und der Oberfläche des Koppelungsansatzes (43") vorgesehen ist und diese miteinander verbindet.

8. Mechanischer Verbinder nach Anspruch 7,
**dadurch gekennzeichnet,**
**dass** die Stabelemente (41, 43) jeweils einen runden Querschnitt aufweisen und koaxial zueinander ausgerichtet sind, wobei auch die Koppelungsausnehmung (41") und der Koppelungsansatz (43") koaxial zueinander ausgerichtet sind.

9. Mechanischer Verbinder nach einem der vorhergehenden Ansprüche,
**dadurch gekennzeichnet,**
**dass** der Lastübertragungsstab (40, 40') zumindest bereichsweise als Gewindestange (35) ausgebildet ist.

10. Mechanischer Verbinder nach Anspruch 9,
**dadurch gekennzeichnet,**
**dass** der mechanische Verbinder (4, 4') als Schraube (3) mit einem den ersten Stützkörper (42) bildenden Schraubenkopf (32, 36) und einem die Gewindestange (35) ausbildenden oder aufweisenden Schraubenschaft (30, 37) ausgestaltet ist.

11. Verbindungseinrichtung (2) für Strukturbauteile (11', 12', 13', 14') eines Weltraumgegenstandes (1) mit zumindest einem mechanischen Verbinder (4) nach einem der vorhergehenden Ansprüche, wobei der zumindest eine mechanische Verbinder (4, 4') zumindest zwei Strukturbauteile (11', 12') des Weltraumgegenstandes (1) mittelbar oder unmittelbar miteinander mechanisch verbindet.

12. Verfahren zur Herstellung eines mechanischen Verbinders (4, 4') nach Anspruch 1 oder einem der Ansprüche 2 bis 10,
**gekennzeichnet durch die Schritte**
a) Zusammenfügen eines ersten Stabelements (41) und zumindest eines zweiten Stabelements (43) mittels eines Fügemittels (46) zu einem Lastübertragungsstab (40, 40')
und vorzugsweise
b) Oberflächenbearbeiten des Lastübertragungsstabs (40, 40'), um einen aus zumindest zwei mittels des Fügemittels (46) zusammengefügten Stabelementen (41, 43) bestehenden Lastübertragungsstab (40, 40') von vorgegebener Außenkontur zu erhalten.

13. Verfahren zur Herstellung eines mechanischen Verbinders (4) nach Anspruch 1 oder einem der Ansprüche 2 bis 10,
**gekennzeichnet durch die Schritte**
a') Additive Fertigung eines Lastübertragungsstabs (40, 40') **durch**
a1') additive Fertigung eines ersten Stabelements (41) aus einem ersten Material,
a2') additive Fertigung eines Fügeabschnitts (45) aus einem Fügemittel (46) an oder auf dem ersten Stabelement (41),
a3') additive Fertigung eines zweiten Stabelements (43) aus dem ersten oder einem weiteren Material an oder auf dem Fügeabschnitt (45)
und vorzugsweise
b') Oberflächenbearbeiten des Lastübertragungsstabs (40, 40'), um einen aus zumindest zwei Stabelementen (41, 43) und einer Fügemittel-Zwischenschicht integral ausgebildeten Lastübertragungsstab (40, 40') von vorgegebener Außenkontur zu erhalten.

14. Verfahren nach Anspruch 11 oder 12,
**dadurch gekennzeichnet,**
**dass** der Schritt des Oberflächenbearbeitens oder die im Zuge der additiven Fertigung vorgenommene Oberflächengestaltung des Lastübertragungsstabs (40, 40') das Fertigen eines Außengewindes (33') auf zumindest einem Oberflächenbereich des Lastübertragungsstabs (40) umfasst.

15. Verfahren nach Anspruch 14,
**dadurch gekennzeichnet,**
**dass** das erste Stabelement (41) oder das zweite Stabelement (43) mit einem Schraubenkopf (32) versehen ist oder bei einer additiven Fertigung mit einem Schraubenkopf (32) versehen wird oder von einem Schraubenkopf (36) gebildet wird.
